# EUROPEAN PATENT APPLICATION

(11) **EP 1 199 663 A2**
(43) Date of publication of application: **24.04.2002**
(21) Application number: 01307920.7
(22) Date of filing: 18.09.2001
(51) Int. Cl.: G06F 17/60

(54) **Online auction systems**

(30) Priority: 18.10.2000 GB 0025570
(71) Applicant: NCR INTERNATIONAL INC., Dayton, Ohio 45479 (US)
(72) Inventor: Mackay, Robin, London E14 6PA (GB); Cudd, Richard, London W5 5DS (GB)
(74) Representative: Williamson, Brian

(57) **Abstract**

A method of conducting an online auction on a communications network, and a corresponding online auction system, involve: a first user terminal generating an offer to sell or to buy an item in accordance with first offer criteria; a second user terminal generating an offer to buy or to sell a corresponding item in accordance with second offer criteria; comparing the offer criteria to match an offer to sell and an offer to buy if any or all of their criteria match; in response to a match between the offers, opening a peer to peer communication channel between the user terminals that made the matching offers; and conducting an auction between those user terminals via the communication channel.

## Description

This invention relates to online auction systems.

Online auctions are a growth area within e-commerce, employed by numerous users to buy and/or sell a plethora of items or lots each day. These items are usually tangible goods but may represent intangible services. Well-known current examples of online auction systems operate under the trade marks e-Bay and QXL. e-Bay, for instance, has grown since its launch in 1995 to serve over 4 million new auctions and 450,000 new items every day, in over 4000 item categories.

In known online auction systems such as e-Bay, buyers visit a website to view items advertised for sale on the website by sellers. If a buyer wishes to buy an item, he or she enters an auction and becomes a bidder for that item by indicating a maximum bid. The system negotiates an outcome automatically by bidding incrementally on the bidder's behalf up to the maximum bid, having regard to factors such as a comparison with bids of different bidders and the seller's minimum reserve price. Once a sale has been agreed between a successful bidder and the seller, the system leaves the bidder and the seller to complete the transaction by exchanging an agreed sum of money for the item bought.

A disadvantage with known online auction systems is that it is necessary for a user, be it bidder or seller, to check back to the website repeatedly to see how the auction is proceeding and how it affects that user. Some known systems try to avoid this problem by sending an e-mail message to a user affected by a change in the auction, such as an incoming increased bid, but e-mail messages are slow to transmit and inconvenient for the user to access.

Consequently, it is not possible in known online auction systems for the user to learn of changes in the auction such as bids or sales as soon as they happen. This means that the user is deprived of real-time information that could be crucial to the outcome of the auction and that would, at least, add to the interest and enjoyment of the auction process. It also follows that the auction process can be painfully slow to complete. Similarly, whilst the automatic processing of known online auction systems can be convenient for users who wish to minimise their participation and involvement, this precludes more active real-time user participation in the sense of a live auction.

In response to these drawbacks, the Inventors have devised a distributed online auction system that accurately matches buyers and sellers using a peer to peer architecture enabling not only automated but also 'live' Internet auctions.

The invention resides in a method of conducting an online auction on a communications network, the method comprising: a first user terminal generating an offer to sell or to buy an item in accordance with first offer criteria; a second user terminal generating an offer to buy or to sell a corresponding item in accordance with second offer criteria; comparing the offer criteria to match an offer to sell and an offer to buy if any or all of their criteria match; in response to a match between the offers, opening a peer to peer communication channel between the user terminals that made the matching offers; and conducting an auction between those user terminals via the communication channel.

The invention also resides in an online auction system for conducting an online auction on a communications network, the system comprising: a first user terminal adapted to generate an offer to sell or to buy an item in accordance with first offer criteria; a second user terminal adapted to generate an offer to buy or to sell a corresponding item in accordance with second offer criteria; matching means for comparing the offer criteria to match an offer to sell and an offer to buy if any or all of their criteria match; and communication means responsive to the matching means to open a peer to peer communication channel for conducting an auction between user terminals that made matching offers.

In preferred embodiments, the invention contemplates software that is resident on a user's PC or other computing device such as an Internet-enabled mobile telephone. The software enables the user to identify other users selling or buying (as appropriate) an item of interest, to participate in auctions as bidder or seller, and to connect directly via the Internet to the seller or buyer of goods without needing to access a third party website.

Specifically, the invention envisages a software application for end users that allows a user to create two different types of software agents, namely a seller agent and a buyer agent. A seller agent creates an auction on a selling user's computing device, given certain parameters such as reserve price, date of auction and description of product. A buyer agent, on the other hand, searches other participating systems over a communications network for an auction that fits a buyer's criteria, and either (a) makes bids on the buyer's behalf or (b) connects the buyer to the seller in order that the buyer may bid 'live' for the item on sale.

The invention therefore extends to an agent adapted to generate, when resident on a user terminal, an offer to buy or to sell an item for matching with an offer from another user terminal, the agent including means responsive to a match between offers to open a peer to peer communication channel between the host user terminal and another user terminal generating a matching offer, and means for running an auction via the communication channel. Similarly, the invention encompasses a user terminal having a software agent resident thereon being adapted to generate an offer to buy or to sell an item, to open a peer to peer communication channel with another user terminal in response to a match between offers and to run an auction on the host terminal.

In this specification, an 'agent' is taken to mean a software application that acts on a user's behalf to convey offer criteria to a server and/or to other user terminals and to respond to the user with news of an auction's progress. The agent of the invention is not necessarily intelligent: if needs be, it can simply follow the user's instructions to act as an interface between the user and an online auction system, and to represent the user in that system.

The invention allows direct communication between bidders and sellers thus alerting those users to changes in an auction as soon as they happen. This direct link also means that it is possible to perform 'live' online auctions as well as the automatic auctions that occur on existing auction sites.

It is preferred for the application of the invention to be installed upon the 'desktop' of the user's computing device to run constantly as a background task. Other desktop tools such as the live chat tool AOL Instant Messenger (trade mark) have demonstrated the power of having an application constantly running in the background of the computer and its appeal to users over accessing a simple website for 'live' services. This appeal extends to the service providers that provide the services accessed via background desktop applications, who benefit from the user's perceived commitment to those services in terms of advertising effectiveness, community-building and so on.

The agent system of the invention also offers an enhanced searching ability that utilises co-occurrence and context vector pattern matching technologies that enable matching to be based on a broad semantic understanding and fuzzy logic; other auction and trading systems rely on simple keyword pattern matching for searching through items on offer.

In order that this invention can be more readily understood, reference will now be made, by way of example, to the accompanying drawings in which:
Figure 1 is a block diagram showing, in outline, a first embodiment of the invention that involves a combination of peer-to-peer and client-server architectures;
Figure 2 is a screen shot of a user interface of a client application in the first embodiment of the invention;
Figure 3 is a block diagram showing a log-in procedure for a user of the system outlined in Figure 1;
Figure 4 is a screen shot of a user interface of a seller agent created by the client application of Figure 2;
Figure 5 is a screen shot of a user interface of a buyer agent created by the client application of Figure 2;
Figure 6 is a screen shot of a user interface presented by the client application when a match is perceived between offers;
Figure 7 is a block diagram corresponding to Figure 1 but showing a multiple-buyer, single-seller scenario in which a seller user's computer acts as a server to the buyer users' computers; and
Figure 8 is a block diagram showing, in outline, a second embodiment of the invention that involves peer-to-peer architecture and has no need of a server.

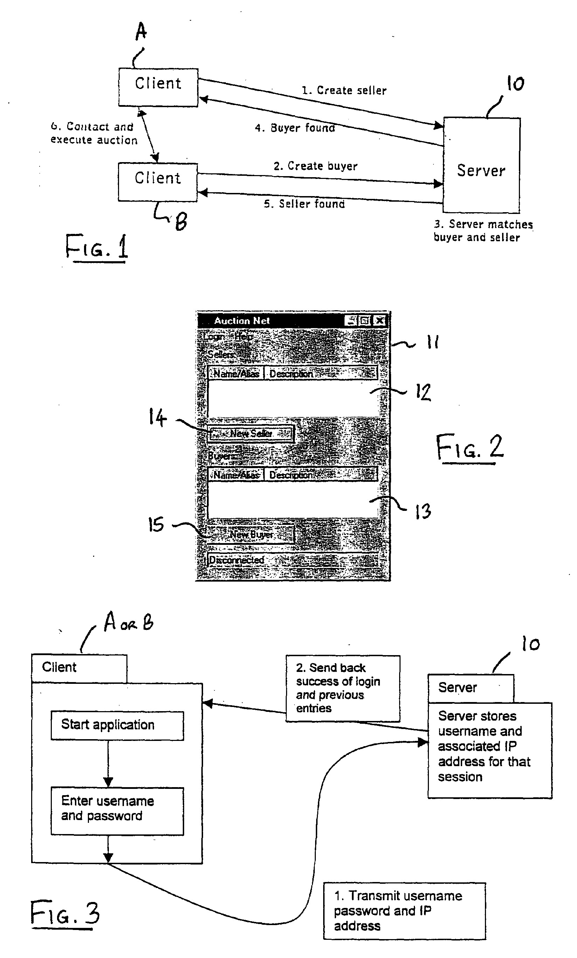

Referring to the first embodiment of the invention as shown in Figure 1, respective users at two clients, Client A and Client B, can access a server 10 via the Internet or other communications network. The architecture of this embodiment therefore has client-server characteristics. There would of course be many more clients in practice, but just two clients are necessary to illustrate the broad inventive concept.

The terminals of Client A and Client B have been enhanced in accordance with the invention, preferably by executing a suitable installation program on the respective client terminals. If desired, that program can be downloaded from a server 10. Specifically, each user has a client application that runs on their terminal in the background and that enables the user to create buyer and/or seller agents dedicated to the task of buying or selling such items as the user may specify, or of locating buyers and sellers for such items. The creation and use of these agents will be described in detail below with reference to Figures 2 to 7.

Once a buyer or seller agent has been created by a user with a view to buying or selling a particular item, the pertinent criteria of a corresponding offer to sell or to buy that item are uploaded to a central database associated with the server 10 (steps 1 and 2 in Figure 1) that looks for matches (step 3). Offers to sell or to buy will be referred to collectively hereinafter as 'offers' as distinct from 'bids' for a particular item in an auction that is initiated by matching an offer to sell with an offer to buy, making a matching pair. Unlike HTTP (hypertext transfer protocol) requests which simply attempt to 'get' a user-specified file via a server and return a 'file not found' result if the file is not promptly found, the offers are phrased in a non-HTTP protocol whose data packet structure will be described in detail below. This protocol is such that several criteria of an offer can be transmitted to the server 10 and then reside on the server 10 in a persistent manner so that even if a match between an offer to buy and an offer to sell is not found immediately, the first offer of a matching pair can be retained by the server 10 until it is matched with the second offer of the pair when the second offer is received and processed by the server 10. The criteria of the offers can include, for example, the price, condition and description of the item. Offer criteria can be associated with a file relating to the item, such as a JPEG picture of goods for sale.

When a match is found between offers to buy and to sell, the respective users are informed of the match (steps 4 and 5 of Figure 1) and are given each other's IP addresses by the server 10. The users can then communicate with one another directly in a peer-to-peer manner (step 6) to carry out the auction proper, in which a user intending to sell receives bids from a user wishing to buy.

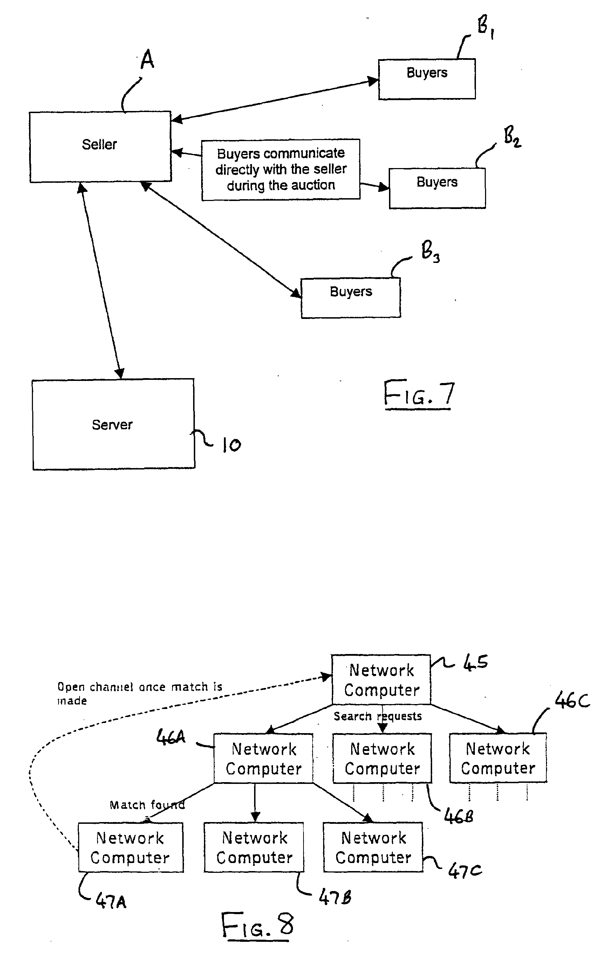

The first offer is retained by the server 10 after an initial match with another offer so that further incoming offers can also be matched with the first offer. In this way, more than one match can be found and more than one pair of participants can be put in contact with each other, as will be shown later in Figure 7: the most common result in that case is to have a sole seller receiving bids from more than one buyer or, in a 'reverse' auction, a sole buyer bidding to more than one seller. This encourages competition that benefits the sole seller or the sole buyer as the case may be. However, where more than one user seeks to sell a particular kind of item at a particular price and more than one user seeks to buy that kind of item at that price, it is of course possible for multiple-seller, multiple-buyer communications to take place, peer-to-peer, creating a group of parallel auctions that match supply and demand.

The auction can either be automatic or live depending on the users' preferences. If the former, the seller receives bids from one or more bidders and when a predetermined threshold has been reached, expressed as a bid value (e.g. a reserve price) and/or a time (e.g. a predetermined auction duration), the sale is agreed automatically at the best prevailing bid. The respective users can then complete the transaction by exchanging the item for the agreed payment. If the latter, the seller receives bids from one or more bidders and those bids are displayed to the seller as they come in. The seller then has the opportunity to respond to a bidder by accepting, rejecting or retaining a bid, depending upon how the seller foresees the auction developing, with a view to maximising the selling price.

It is also possible for an auction to be automatic to one user and 'live' to another user. For example, automatic bidding can take place from buyer agents while the seller uses a seller agent to view and respond in real time to the incoming automatically-generated bids.

The description above based upon Figure 1 merely outlines the first embodiment of the invention: reference is now made to Figures 2 to 7 to describe the first embodiment in more detail.

Figure 2 shows the user interface 11 of a client application, which runs on a user's client terminal as an entirely separate application from a standard web browser. All users of the system, whether buyers or sellers, have this client application. The application can be set to start automatically when a user logs in or boots-up their computer, or a user can simply start the application from their computer in the usual way.

As shown in Figure 3, a user at client terminal A or B firstly logs in to the system with a username and password which is sent to the server 10 along with the IP address of the computing device that user is currently using as a client terminal (step 1). The server 10 checks and validates the username and password and stores the IP address in order to carry out further communications with the user. The server 10 reports the login result to the client and, if login was successful, sends to the user the offer criteria of any previous buyer and seller agents created by that user (step 2). Alternatively, these criteria may be stored and accessed locally on the user's client terminal.

Returning to Figure 2, the user interface 11 of the client application has two main fields, namely a seller field 12 and a buyer field 13, that respectively display information on seller or buyer agents already in existence. In those fields 12 and 13, each agent can be identified by a user-assigned name or alias together with a description of the item being offered or sought (not shown). Clicking on the appropriate completed line of a field 12, 13 calls up details of an existing agent, whereas clicking on a 'new seller' button 14 or a 'new buyer' button 15 allows the user to create a new agent whose name/alias and associated description then appear in a field 12, 13 as appropriate.

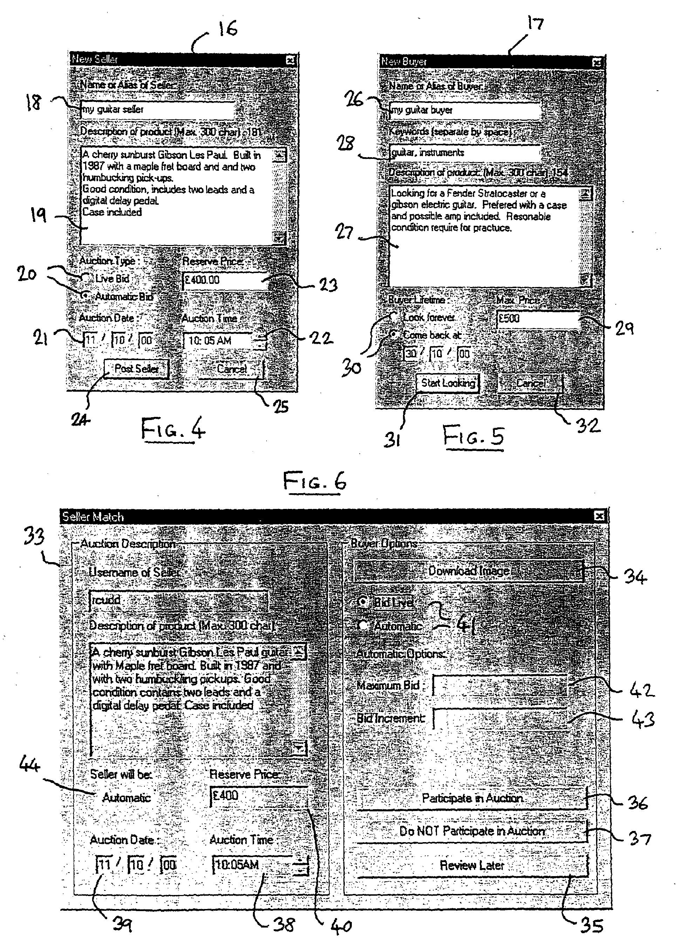

Figures 4 and 5 show user interfaces of seller and buyer agents, designated by the reference numerals 16 and 17 respectively. For a new agent, the interface 16, 17 displays blank fields constituting a form ready for the user to enter data, whereas for existing agents, the fields already contain data that can be user-edited when the user interface is opened. The interfaces 16, 17 shown in Figures 4 and 5 reflect new agents in which the fields have been filled in to complete the form, but the data has not yet been posted.

Looking firstly at the seller agent interface 16 of Figure 4, the user has filled out the form in the fields shown. The first field 18 holds a short name or alias for the agent so that the user can identify that agent in future in the interface 11 of Figure 2 and hence distinguish it from other agents. The field 19 below is a limited-character description of the item that will be used for the purpose of matching with possible buyers. A pair of option buttons 20 enable the user to specify whether the auction will be 'live' or 'automatic', and 'date', 'time' and 'reserve price' fields 21, 22 and 23 allow the user to enter further information about the auction such as its proposed time and date and the seller's reserve price. Finally, a 'post seller' button 24 and a 'cancel' button 25 allow the user to post new or amended offer-to-sell criteria or to abandon creation or editing of a seller agent.

The buyer agent interface 17 of Figure 5 is broadly similar to the seller agent interface 16 of Figure 4. A buyer user gives a name to his or her buyer agent in field 26, describes the item sought by entering a limited-character description in field 27 and appropriate keywords in field 28, and enters the maximum price that he or she is prepared to pay in field 29. Option buttons 30 enable the user to tell the buyer agent to keep looking for a match for as long as that agent remains in existence (or a server-set timeout period expires) or, alternatively, when to report back that no match has been found.

A 'start looking' button 31 and a 'cancel' button 32 allow the user to post new or amended offer-to-buy criteria or to abandon creation or editing of a buyer agent.

Although not shown in the screen shots of Figures 4 and 5, a user can also attach images of an item the subject of an offer. It is envisaged that the image itself will not be sent to the server 10, only information about where that image is stored, for example on the user's client machine or elsewhere on the communications network. The image can then be downloaded in a peer-to-peer fashion later in the process.

Once the forms for a buyer or a seller agent are created and offer criteria are posted, those criteria are placed into a network transfer data packet to be sent to the server 10. There are two types of packet: a buyer packet and a seller packet. These packets have the following format:

### Buyer Packet:

Packet Size: 2000 bytes

### Format:

| **Data type and element** | **Byte Range** | **Description** |
|---|---|---|
| Integer packet_type: | bytes 0-4 | An integer which describes the type of packet being sent |
| Integer name_size: | bytes 4-8 | The length of the name being sent |
| char* name: | bytes 8-136 | An array containing the name to be sent |
| Int keyword_size: | bytes 136-140 | An integer containing the length of the keyword |
| char* keyword: | bytes 140-396 | An array containing the keyword |
| Int descrition_size: | bytes 396-400 | An integer containing the length of the description |
| char* description: | bytes 400-1424 | An array of character containing the description itself |
| Int image_path_size: | bytes 1424-1428 | An integer containing the length of the image path.**(not used by the buyer)** |
| char* image_path: | bytes 1428-1556 | A character array containing the image_path itself (where the image is stored)(not used) |
| Redundancy | bytes 1556-2000 | Unused bytes for future extensions. |

In the case of the buyer packet, several of the fields remain redundant such as the image_path_size and the image_path fields. In the proposed system, these fields are not used by a buyer agent since it is assumed that buyers will not submit images, although buyers could do so in which case the fields may be enabled. However, redundant fields are left in the data packet to allow the system to use identical packet sizes for all communications. The packet size is 2000 bytes or 2K. The server 10 knows to treat a buyer packet as a buyer packet by detecting and responding to the packet_type descriptor that is the first field of the data packet.

### Seller Packet:

Packet Size: 2000 bytes

### Format:

| **Data type and element** | **Byte Range** | **Description** |
|---|---|---|
| Integer packet_type: | bytes 0-4 | An integer which describes the type of packet being sent |
| Integer name_size: | bytes 4-8 | The length of the name being sent |
| char* name: | bytes 8-136 | An array containing the name to be sent |
| Int keyword_size: | bytes 136-140 | An integer containing the length of the keyword |
| char* keyword: | bytes 140-396 | An array containing the keyword |
| Int descrition_size: | bytes 396-400 | An integer containing the length of the description |
| char* description: | bytes 400-1424 | An array of character containing the description itself |
| Int image_path_size: | bytes 1424-1428 | An integer containing the length of the image path. |
| char* image_path: | bytes 1428-1556 | A character array containing the image_path itself (where the image is stored) |
| Redundancy | bytes 1556-2000 | Unused bytes for future extensions. |

The next step of the process involves matching buyers and sellers, and informing users of a match.

The server 10 receives buyer packets and seller packets representing offers to buy and offers to sell and stores them in its associated database. Periodically the server 10 performs a matching procedure among stored offers using a context-vector matching algorithm. If suitable matches are found then the server 10 informs the users that made the matching offers and the information is sent to the matched buyers and sellers. For example, a buyer will receive information about the item for sale and if that buyer chooses to accept and participate in an auction, the seller is informed about the buyer's acceptance. Information about the item for sale is sent to the potential buyers using the same data packet (seller packet) as described above. This will also include the seller's current IP address (if available, i.e. if the seller's terminal are currently online) which will be added in the redundancy bytes at the end of the data packet, as below:

| **Data type and element** | **Byte Range** | **Description** |
|---|---|---|
| Int Ipaddress_size: | bytes 1556-1560 | An integer containing the length of the IP address. |
| char* Ipaddress: | bytes 1560-1688 | A character array containing the IP address itself |

When a match is made, a seller match interface appears on the buyer's terminal. A screen shot of the seller match interface 33 is shown in Figure 6.

By clicking a 'download image' button 34, the buyer can use the image path and IP address information to download any available images of the item directly from the seller (or from a network address nominated by the seller) so as to help the buyer decide whether or not to participate in an auction.

The buyer can defer a decision by clicking a 'review later' button 35. When the buyer reaches a decision, this is effected by clicking on a 'participate' button 36 or a 'do not participate' button 37 as appropriate, and is notified directly to the matched selling user. The server 10 can be informed of the buyer's decision for the purpose of information logging by copying the decision notification to the server 10.

An interface 33 such as that of Figure 6 also records the time, date and reserve price of the proposed auction in fields 38, 39 and 40 and can remind its user when the auction is about to begin. The user can use option buttons 41 to decide at this point whether they would like to bid automatically, in which case they enter a highest price and bid increment in fields 42 and 43, or 'live' when the auction is actually occurring. The other user's participation status ― 'live' or 'automatic' ― appears in field 44.

Once matches between a seller and possible buyers have been made and the necessary communications established, the elements are in place for an auction to occur. The auction process allows the seller's software to become a server and to serve the entire auction process, as shown in Figure 7.

More closely to simulate a live auction, the invention optionally involves an agent such as a seller agent A reporting the changing status of an auction to a group of other agents participating in an auction, the other agents being buyer agents B₁, B₂, B₃ in this example that are issuing competing bids for an item offered by the seller agent A. For example, the seller agent A can inform all of the participating buyer agents B₁, B₂, B₃ of the fact that an increased bid has been received from one of the buyer agents B₁, B₂, B₃. Another example is where the seller agent A informs the group of buyer agents B₁, B₂, B₃ that one of their number has dropped out of the auction. The buyer agent B₁, B₂, B₃ that issued the bid or dropped out may be kept anonymous or its identity may be made known to the other buyer agents B₁, B₂, B₃. Either way, a buyer agent B₁, B₂, B₃ can respond to the activity of competing buyer agents B₁, B₂, B₃, for example by submitting an increased bid to exceed other bids or by withdrawing from the auction if the price of the item concerned has gone beyond its user's willingness to pay. The buyer agent B₁, B₂, B₃ can respond automatically in accordance with parameters pre-set by the user, or under the real-time control of the user.

The changing status of an auction can be expressed as an auction timeline displayed on the buyers' terminals. An example of such a timeline is as follows:

| Time | Message | Current Highest Bid | Current Highest Bidder |
|---|---|---|---|
| 10:05 Am | Auction Begins | | |
| 10:05 Am | Bidder 1 Bids $100 | $100 | Bidder 1 |
| 10:06 Am | Bidder 2 Bids $110 | $110 | Bidder 2 |
| 10:07 Am | Bidder 1 Bids $115 | $115 | Bidder 1 |
| 10:08 Am | Bidder 3 Bids $130 | $130 | Bidder 3 |
| 10:15 Am | Auction Ends | $130 | Bidder 3 |
| 10:15 Am | Bidder 3 Wins | | |

Once the auction is completed, the various buyers B₁, B₂, B₃ are informed who has been successful and the connections between the various peers are brought down, save that the successful buyer B₃ can remain in contact with the seller A to arrange for exchange of the item and the agreed payment.

In a situation where a buyer is offline so that their terminal cannot participate in an auction, the server 10 could act on their behalf in an automatic bidding scenario if it knows the maximum bid that buyer is prepared to make, and that buyer's preferred bid increment.

Turning finally to the second embodiment shown in Figure 8, a user's network computer 45 holds a list of IP addresses defining a group of other network computers 46A, 46B and 46C. An offer to sell or to buy is made by a seller or buyer agent to the IP addresses in the proxy list, so being sent to the group of other network computers 46A, 46B and 46C to enquire as to whether any of them wish to participate in auctions that match the offer criteria. In essence, the receiving network computers 46A, 46B and 46C are interrogated as to whether they run buyer or seller agents that hold a matching offer. If they do, they can report back to the sending or requesting network computer 45 so that a communications channel can be opened between the bidder and the seller for conduct of an auction. In this variant of the invention, matching is conducted at one or other of the sending and receiving network computers, most logically by the receiving network computer.

Each of the network computers on the proxy list may in turn be connected to other network computers 47A, 47B and 47C to which they can forward the request, thus forming the peer to peer daisy-chain or tree structure shown in simplified form in Figure 8. In this scenario, each network computer 45, 46 is connected to a few other network computers 46, 47, say three as shown, which are in turn connected to a few other network computers and so on. When searching for matches the request is forwarded to the network computers 46A, 46B and 46C to which the user's network computer 45 is connected. If no match is found on those network computers 46A, 46B and 46C defining the first level of the structure, then the request is forwarded to the second-level network computers 47A, 47B and 47C connected to the first-level computers 46A, 46B and 46C. This cascading process continues until a match is found, until a predetermined number of network computers or levels of the structure have been searched, or until a timeout brings the search to a close after a predetermined period of time.

In the Figure 8 approach, there is no need for a server. The requesting network computer 45 merely needs to have the IP address of one network computer 46, or the IP addresses of a few network computers 46A, 46B and 46C, for the chain or tree to begin. The necessary IP address(es) could be downloaded by the requesting network computer 45 from a web site or distributed with software. However, it would also be possible to download the necessary IP address(es) from a server 10 if needs be.

It would also be possible for a user's network computer 45 to broadcast over the network a request defining an offer in terms of the user's buying or selling criteria. If another network computer 46, 47 receiving the broadcast runs a buyer or seller agent that recognises its user wishes to participate in an auction matching those criteria, it responds to the broadcast and the computers connect to each other for the auction to begin.

An advantage of the approach of Figure 8 is that it is possible to find participating network computers 46, 47 even when a server is down. It could thus be a fall-back to the architecture of Figure 1, to be used if there is no response from the server 10 in operation of the Figure 1 embodiment. A timeout can be set so that if no response has been received from the server 10 after a predetermined (but not necessarily fixed) period of time, then the chain or tree process is followed.

Many variations are possible within the inventive concept. For example, the persistence of offer criteria on the server 10 in the Figure 1 embodiment can be applied to the network computers 45, 46, 47 of the Figure 8 embodiment. That is to say, if a network computer 45, 46, 47 receives an offer and is not at that time running a buyer or seller agent that holds a matching offer, the criteria of the received offer may be stored by the receiving network computer 45, 46, 47 (preferably for a limited period) in case its user creates an agent that generates a matching offer in the near future. The user can then be put in contact with the user that issued the received offer, to see if the item is still for sale or wanted as the case may be.

It is also possible in all embodiments for an offer to be sent, transmitted or broadcast repeatedly to a server 10 or to other network computers 45, 46, 47 at whatever intervals may be deemed appropriate, so that if a matching offer is not found initially, it may be found by repeating the exercise after a matching offer has been created.

In another variant of the invention, a user can interrogate a server 10 or another user terminal 45, 46, 47 to identify live auctions with which the server or user terminal is currently involved. That way, the user can view and/or participate in a live auction without having to submit and match offer criteria.

The present invention may be embodied in other specific forms without departing from its essential attributes. Accordingly, reference should be made to the appended claims and other conceptual statements herein rather than to the foregoing specific description as indicating the scope of the invention.

## Claims

1. A method of conducting an online auction on a communications network, the method comprising:
a first user terminal (A, 45) generating an offer to sell or to buy an item in accordance with first offer criteria;
a second user terminal (B, 46, 47) generating an offer to buy or to sell a corresponding item in accordance with second offer criteria;
comparing the offer criteria to match an offer to sell and an offer to buy if any or all of their criteria match;
in response to a match between the offers, opening a peer to peer communication channel between the user terminals (A, B, 45, 46, 47) that made the matching offers; and
conducting an auction between those user terminals via the communication channel.

2. The method of Claim 1, further comprising using the criteria of an offer to search for offers with matching criteria.

3. The method of Claim 2, wherein the search is conducted on a central database accessible by the user terminals (A, B), to which database the offers are transmitted.

4. The method of Claim 3, wherein the database is associated with a server (10) to which the user terminals (A, B) are clients.

5. The method of Claim 4, wherein comparison and matching of offer criteria are performed at the server end.

6. The method of Claim 2, wherein the search is conducted across the communications network of which the user terminals (A, B, 45, 46, 47) are a part.

7. The method of Claim 6, wherein an offer is broadcast by a user terminal (45) to other user terminals (46, 47) on the network.

8. The method of Claim 6, wherein an offer is sent by a user terminal (45) to a group of other user terminals (46) defined by the sending user terminal (45).

9. The method of any of Claims 7 or 8, wherein comparison and matching of offer criteria are performed by a user terminal (46, 47) that receives an offer from another user terminal (45, 46).

10. The method of Claim 9, wherein the received offer is compared with an offer generated by and stored by the user terminal (46, 47) that receives the offer.

11. The method of any preceding Claim, wherein an offer is stored in readiness for comparison and matching with a subsequent offer.

12. The method of Claim 11, wherein the offer is stored for a timeout period.

13. The method of any preceding Claim, wherein the offers are generated by software agents resident on the respective user terminals (A, B, 45, 46, 47).

14. The method of Claim 13, wherein a software agent searches for matching offers across the communications network.

15. The method of Claim 13 or Claim 14, wherein a software agent receives, compares and matches offers.

16. The method of any of Claims 13 to 15, wherein a software agent opens the peer to peer communication channel between user terminals (A, B, 45, 46, 47) in response to a match between offers.

17. The method of any of Claims 13 to 16, wherein a software agent creates an auction on a user terminal (A, B, 45, 46, 47).

18. The method of Claim 17, wherein the software agent runs the auction as a background task on the desktop of the user terminal (A, B, 45, 46, 47).

19. An online auction system for conducting an online auction on a communications network, the system comprising:
a first user terminal (A, 45) adapted to generate an offer to sell or to buy an item in accordance with first offer criteria;
a second user terminal (B, 46, 47) adapted to generate an offer to buy or to sell a corresponding item in accordance with second offer criteria;
matching means for comparing the offer criteria to match an offer to sell and an offer to buy if any or all of their criteria match; and
communication means responsive to the matching means to open a peer to peer communication channel for conducting an auction between user terminals (A, B, 45, 46, 47) that made matching offers.

20. The system of Claim 19, further comprising search means responsive to the criteria of an offer to search for offers with matching criteria.

21. The system of Claim 20, further comprising a central database accessible by the user terminals (A, B), the database including receiving offers from user terminals.

22. The system of Claim 21, wherein the database is associated with a server (10) to which the user terminals (A, B) are clients.

23. The system of Claim 22, wherein the matching means is associated with the server (10).

24. The system of any of Claims 19 to 23, wherein the user terminals (45, 46, 47) are arranged in a daisy chain or tree structure.

25. The system of Claim 24, wherein the matching means is associated with a user terminal (45, 46, 47).

26. The system of any of Claims 19 to 25, further including a searchable store of offers received from user terminals (A, B, 45, 46, 47).

27. The system of Claim 26, further including timeout means for removing an offer from the store after a timeout period.

28. The system of any of Claims 19 to 27, wherein a software agent resident on a user terminal (A, B, 45, 46, 47) is adapted to generate an offer.

29. The system of any of Claims 19 to 28, wherein a software agent resident on a user terminal (A, B, 45, 46, 47) is adapted to search for offers.

30. The system of any of Claims 19 to 29, wherein a software agent resident on a user terminal (A, B, 45, 46, 47) is adapted to receive, compare and match offers.

31. The system of any of Claims 19 to 30, wherein a software agent resident on a user terminal (A, B, 45, 46, 47) is adapted to open the peer to peer communication channel between user terminals (A, B, 45, 46, 47) in response to a match between offers.

32. The system of any of Claims 19 to 31, wherein a software agent resident on a user terminal (A, B, 45, 46, 47) is adapted to create an auction on that user terminal (A, B, 45, 46, 47).

33. The system of Claim 32, wherein the software agent is adapted to run the auction as a background task on the desktop of the user terminal (A, B, 45, 46, 47).

34. The system of any of Claims 19 to 29, wherein a seller agent resident on a user terminal (A, B, 45, 46, 47) is adapted to make an offer to sell an item.

35. An agent adapted to generate, when resident on a user terminal (A, B, 45, 46, 47), an offer to buy or to sell an item for matching with an offer from another user terminal (A, B, 45, 46, 47), the agent including means responsive to a match between offers to open a peer to peer communication channel between the host user terminal (A, B, 45, 46, 47) and another user terminal generating a matching offer (A, B, 45, 46, 47), and means for running an auction via the communication channel.

36. The agent of Claim 35, further including means for searching for matching offers or to receive, compare and match offers.

37. A user terminal (A, B, 45, 46, 47) adapted for use in the method of any of Claims 1 to 27 or in the system of any of Claims 28 to 50, the terminal having a software agent resident thereon being adapted to generate an offer to buy or to sell an item; to open a peer to peer communication channel with another user terminal (A, B, 45, 46, 47) in response to a match between offers; and to run an auction on the host terminal (A, B, 45, 46, 47).

38. The user terminal of Claim 37, wherein the software agent is also adapted to search for matching offers or to receive, compare and match offers.
